# EUROPÄISCHE PATENTSCHRIFT

(11) **EP 3 022 093 B1**
(45) Veröffentlichungstag und Bekanntmachung des Hinweises auf die Patenterteilung: **28.02.2018**
(21) Anmeldenummer: 14730913.2
(22) Anmeldetag: 17.06.2014
(51) Int. Cl.: B60R 21/205

(54) **INSTRUMENTENTAFEL FÜR EIN FAHRZEUG**
INSTRUMENT PANEL FOR A VEHICLE
TABLEAU DE BORD D'UN VEHICULE

(30) Priorität: 15.07.2013 DE 102013213791
(43) Veröffentlichungstag der Anmeldung: 25.05.2016
(73) Patentinhaber: Volkswagen Aktiengesellschaft, 38440 Wolfsburg (DE)
(72) Erfinder: KNAUF, Ronny, 39343 Beendorf (DE); REHMKE, Thomas, 29392 Wesendorf (DE)
(86) Internationale Anmeldenummer: PCT/EP2014/062732
(87) Internationale Veröffentlichungsnummer: WO 2015/007449

(56) Entgegenhaltungen:
- EP-A1- 1 350 662
- WO-A1-03/033314
- DE-A1- 19 618 817
- DE-A1- 19 958 865
- DE-A1-102009 058 688
- DE-A1-102009 058 704
- DE-A1-102010 016 748
- DE-A1-102011 108 921
- DE-C1- 10 108 685
- US-A1- 2007 235 987
- US-B1- 6 464 280

## Beschreibung

Die Erfindung betrifft eine Instrumententafel für ein Fahrzeug nach dem Oberbegriff des Patentanspruches 1.

Eine derartige Instrumententafel ist an einem Modulquerträger montiert, der sich in der Fahrzeugquerrichtung zwischen gegenüberliegenden A-Säulenknoten eines Fahrzeugrohbaus erstreckt.

Aus der DE 10 2009 058 688 A1 ist eine Instrumententafel für ein Fahrzeug nach dem Oberbegriff von Anspruch 1 bekannt. Diese weist ein Instrumententafel-Oberteil auf, an dessen Beifahrerseite eine Airbaganordnung integriert ist. Die Airbaganordnung weist eine, einen Schusskanal begrenzende rahmenförmige Schusskanalwand auf. Der Schusskanal ist an seiner Airbag-Austrittsseite von einem Airbagdeckel überdeckt. An seiner gegenüberliegenden Seite ist ein Airbagmodul montiert, das unter anderem den Airbag sowie einen Gasgenerator aufweisen kann. Die Schusskanalwand mit dem daran montierten Airbagmodul ist an der Unterseite des Instrumententafel-Oberteils angeformt.

In der DE 10 2009 058 688 A1 ist die Schusskanalwand über eine Befestigungslasche am Modulquerträger abgestützt. Auf diese Weise wird die Gewichtskraft der Airbaganordnung nicht alleine von dem Instrumententafel-Oberteil getragen, sondern vielmehr auch vom Modulquerträger aufgenommen. Bei hohen Innenraum-Temperaturen im Fahrzeug, insbesondere in Heißländern, würde ohne eine solche zusätzliche Abstützung am Modulquerträger die Gefahr bestehen, dass es aufgrund der hohen Temperaturen zu einem Materialfluss im Instrumententafel-Oberteil kommt und sich dadurch die Kontur der Schusskanalwand auf der Sichtseite der Instrumententafel abzeichnet. Durch die Befestigung am Modulquerträger wird außerdem ein betriebsbedingtes Aufschwingen der Airbaganordnung bis in den Resonanzbereich verhindert.

Die Bereitstellung der oben erwähnten Befestigungslasche zur Abstützung der Airbaganordnung am Modulquerträger ist mit einer Erhöhung des Bauteilgewichts sowie mit einem erhöhten Bauteilaufwand verbunden.

Weitere Instrumententafeln mit darin integrierten Airbaganordnungen sind aus den folgenden Druckschriften bekannt, nämlich DE 10 2011 108 921 A1, US 6 464 280 B1, EP 1 350 662 A1, DE 199 58 865 A1, DE 10 2009 058 704 A1, DE 196 18 817 A1, DE 10 2010 016 748 A1, DE 101 08 685 C1, US 2007/0235987 A1 und WO 03/033314 A1.

Die Aufgabe der Erfindung besteht darin, eine Instrumententafel für ein Fahrzeug bereitzustellen, bei der die Airbaganordnung unter Bauteilreduzierung sowie in einfacher Weise betriebssicher in der Instrumententafel integriert ist.

Die Aufgabe ist durch die Merkmale des Patentanspruches 1 gelöst. Bevorzugte Weiterbildungen der Erfindung sind in den abhängigen Ansprüchen offenbart.

Die Erfindung beruht auf dem Sachverhalt, dass in gängiger Praxis das Instrumententafel-Oberteil als Unterstruktur einen gerüstartigen Grundkörper aufweist, wie er beispielhaft aus der DE 100 62 151 A1 bekannt ist. Der Grundkörper ist am Montagequerträger des Fahrzeugrohbaus montiert und weist Aufnahmen zur Bestückung von Funktionselementen auf, etwa einem Radio, einem Handschuhkasten oder dergleichen. Zudem weist der Grundkörper Begrenzungswände auf, mit denen zumindest ein Luftkanal eines Fahrzeug-Belüftungssystems definiert wird, insbesondere ein in der Fahrzeugquerrichtung entlang der Windschutzscheibe verlaufender Defrostkanal.

Im Stand der Technik ist der gerüstartige Grundkörper außer Kontakt mit der Schusskanalwand der beifahrerseitigen Airbaganordnung und wird daher nicht zur Abstützung des Bauteilgewichts der Airbaganordnung verwendet. Vor diesem Hintergrund ist in Abgrenzung dazu gemäß dem Kennzeichnungsteil des Patentanspruches 1 der Grundkörper zusätzlich mit zumindest einem Stützabschnitt versehen, auf den die Schusskanalwand abstützbar ist. Erfindungsgemäß wird daher die Abstützfunktion nicht von einer Stütz- oder Befestigungslasche bewirkt, sondern vielmehr unter Weglassung einer solchen Stützlasche unmittelbar durch den Grundkörper.

Die Erfindung ist speziell bei dem folgenden Materialaufbau der Instrumententafel von Vorteil: So kann das Instrumententafel-Oberteil ein spritzgegossenes Bauteil sein, in dem die Schusskanalwand und der Airbagdeckel materialeinheitlich und einstückig integriert sind. Dadurch ergibt sich eine äußerst komplexe Bauteilgeometrie des Instrumententafel-Oberteils, bei der zum Beispiel eine Anformung der oben erwähnten Stützlaschen an der Schusskanalwand fertigungstechnisch problematisch ist. Erfindungsgemäß wird auf eine solche Anformung der Stützlasche am Schusskanal verzichtet und anstelle dessen die Stützfunktion durch den ohnehin verbauten Grundkörper übernommen.

In einer bevorzugten Ausführungsform kann das Instrumententafel-Oberteil ein formstabiler Schaumträger sein, und zwar mit einer darauf angeordneten Schaumschicht und einer sichtseitigen Dekorhaut. Ein derartiger Mehrschichtaufbau wird in an sich bekannter Weise in einem Aufschäumvorgang hergestellt, bei dem ein Schaumträger und eine Dekorhaut mit der Schaumschicht hinterspritzt werden.

Erfindungsgemäß ist die Schusskanalwand in einer losen klapperfreien Anlage mit einem ersten Stützabschnitt des Grundkörpers in Anlage gebracht, insbesondere in einem Linienkontakt.

Bevorzugt kann das Airbagmodul im Kanalquerschnitt der Schusskanalwand angeordnet sein. Zur Halterung des Airbagmoduls kann die Schusskanalwand an ihrem, von dem Instrumententafel-Oberteil abgewandten Ende in zumindest einen, nach außen abgewinkelten Montageschenkel übergehen. Am Montageschenkel der Schusskanalwand kann ein Gehäuseflansch des Airbagmoduls angebunden sein, bevorzugt in einer Schraubverbindung, das heißt von unten an den Schusskanalwand-Montageschenkel verschraubt sein. Bevorzugt können jeder der in die Fahrzeugquerrichtung weisenden Seitenwände des Schußkanals jeweils zwei Schraubpunkte vorgesehen, die in der Fahrzeuglängsrichtung voneinander beabstandet sind. In etwa mittig zwischen den Schraubpunkten jeder Schußkanal-Seitenwand kann jeweils ein Grundkörper-Stützabschnitt, etwa ein Grundkörperflansch eingeklemmt sein.

In einer weiteren Ausführungsform kann der Grundkörper-Stützabschnitt als ein Grundkörperflansch ausgeführt sein. Auf diesem kann sich beispielhaft der oben erwähnte Schusskanal-Montageschenkel abstützen. Für eine betriebssichere Anbindung kann der Grundkörperflansch zwischen dem Schusskanal-Montageschenkel und dem Gehäuseflansch des Airbagmoduls unter Bildung eines Dreilagenaufbaus eingeklemmt sein.

Die im Stand der Technik verwendete Stützlasche ist normalerweise mittig an der in der Fahrtrichtung vorderen Schußkanalwand angebunden. In Abgrenzung dazu ist es für eine betriebssichere sowie vibrationsfreie Halterung bevorzugt, wenn der Grundkörper nicht nur einen Stützabschnitt, sondern mehrere voneinander beabstandete Stützabschnitte aufweist. Dadurch ergibt sich eine möglichst breite Abstützbasis für die Airbaganordnung. Bevorzugt ist ein erster Stützabschnitt des Grundkörpers in der Fahrtrichtung vor dem Airbagmodul positioniert, auf dem sich die vordere Schusskanalwand abstützt. Zusätzlich kann ein zweiter und ein dritter Stützabschnitt vorgesehen sein, die in der Fahrzeugquerrichtung betrachtet jeweils seitlich am Airbagmodul positioniert sind und auf denen sich jeweils die seitlichen Schusskanalwände abstützen.

Wie oben erwähnt, kann das Instrumententafel-Oberteil mit dem gegebenenfalls einstückig integrierten Airbagdeckel sowie der einstückig integrierten Schusskanalwand ein Spritzgussformteil sein. In diesem Fall wird zur Herstellung des Instrumententafel-Oberteils eine Kunststoffschmelze, etwa aus Polypropylen, unter Druck und Hitze in eine Spritzgießformkammer eines Formwerkzeuges eingebracht, die die Negativform des Instrumententafel-Oberteils nachbildet. Die Spritzgieß-Formkammer ist in gängiger Praxis von Werkzeugteilen begrenzt, die nach erfolgter Formgebung und Abkühlung in eine Entformungsrichtung auseinander bewegbar sind.

Die vorstehend erläuterten und/oder in den Unteransprüchen wiedergegebenen, vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination zur Anwendung kommen.

Die Erfindung und ihre vorteilhaften Aus- und Weiterbildungen sowie deren Vorteile sind nachfolgend anhand von Zeichnungen näher erläutert.

Es zeigen:
- Fig. 1: eine Instrumententafel für ein Fahrzeug in einer perspektivischen Alleinstellung;
- Fig. 2: eine vergrößerte Teilschnittdarstellung entlang der Schnittebene I-I aus der Fig. 1;
- Fig. 3: eine Teilschnittdarstellung entlang der Schnittebene II-II aus der Fig. 1; und
- Fig. 4: in einer Explosionsdarstellung das Airbagmodul sowie einen angedeuteten Grundkörperflansch vor dem Zusammenbau mit der Unterseite des Instrumententafel-Oberteils.

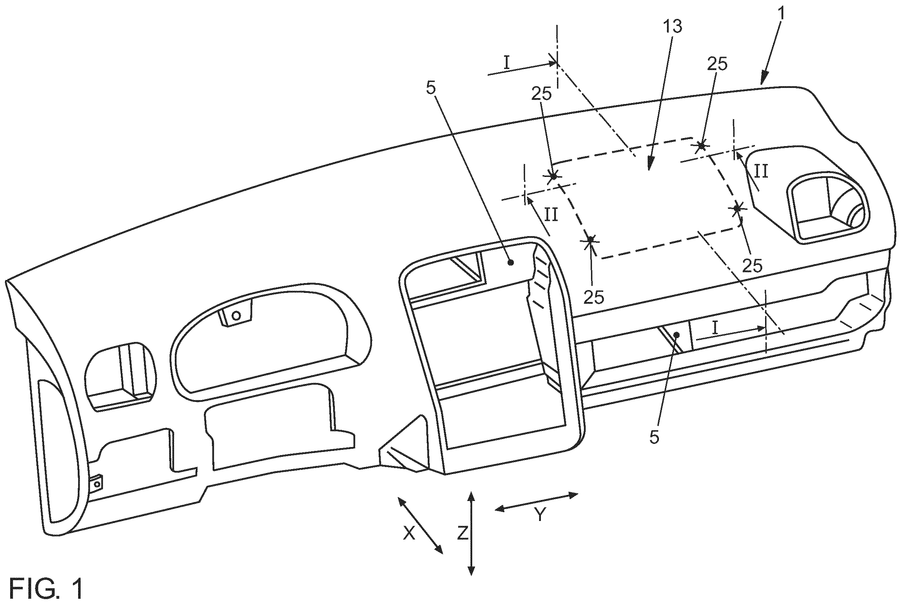

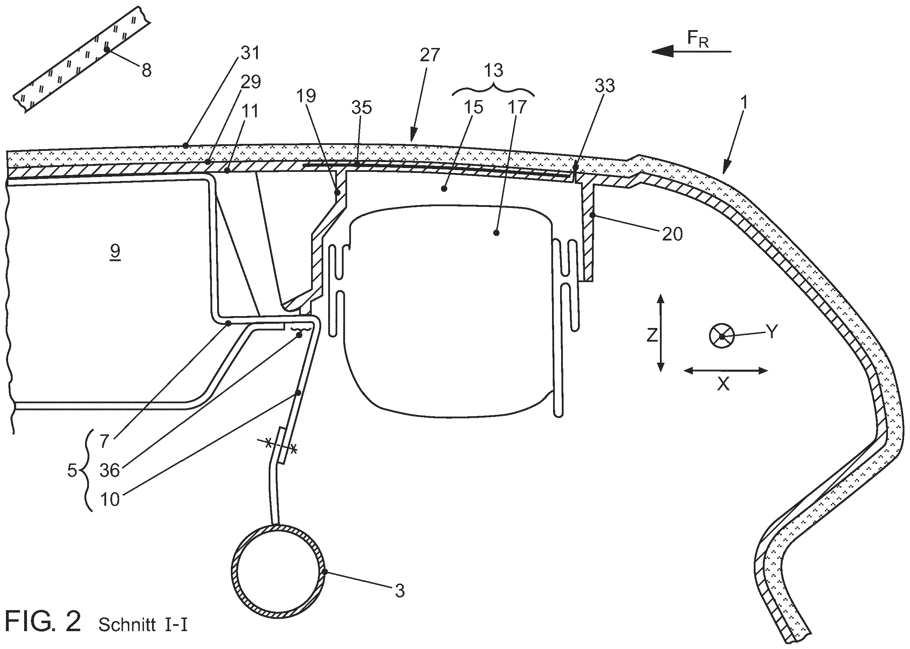

In der Fig. 1 ist in einer perspektivischen Alleinstellung eine Instrumententafel 1 gezeigt, und zwar mit noch nicht darin bestückten Funktionselementen, das heißt Tachometer, Personenausströmer, Handschuhkasten, Radio oder dergleichen. Im Zusammenbauzustand ist die Instrumententafel 1 auf einem Modulquerträger 3 (Fig. 2) montiert, der sich zwischen dem oberen A-Säulenknoten eines Fahrzeugaufbaus erstreckt.

In der Fig. 2 ist ein Zusammenbauzustand gezeigt, bei dem die Instrumententafel 1 über einen gerüstartigen Grundkörper 5 auf dem Modulquerträger 3 montiert ist. Der Grundkörper 5 weist unter anderem Aufnahmen für die oben erwähnten Funktionselemente der Instrumententafel 1 auf. Zudem definiert der Grundkörper 5 mit Begrenzungswänden 7 Luftkanäle des Fahrzeug-Belüftungssystems, das heißt in der Fig. 2 beispielhaft einen in der Fahrzeugquerrichtung y entlang der Windschutzscheibe 8 verlaufenden Defrostkanal 9. Dieser ist von der Begrenzungswand 7 sowie einem sichtseitigen Instrumententafel-Oberteil 11 begrenzt. Das Instrumententafel-Oberteil 11 bildet die Sichtseite der Instrumententafel 1 und überdeckt den Grundkörper 5 sichtgeschützt.

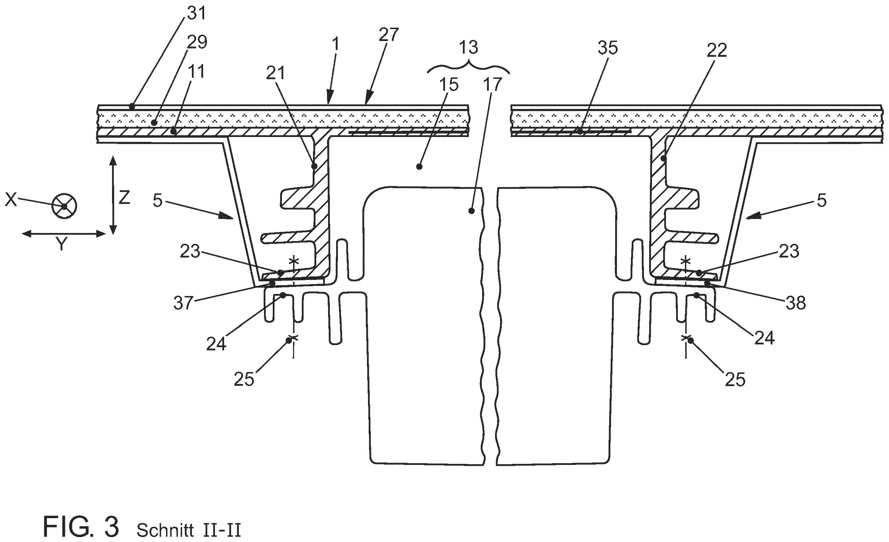

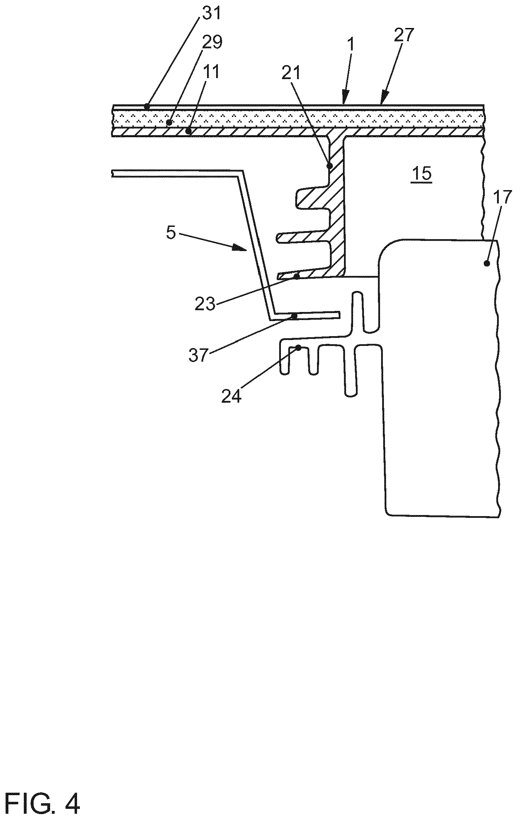

An der Beifahrerseite der Instrumententafel 1 ist eine Airbaganordnung 13 vorgesehen, die gemäß der Fig. 2 aus einem, an der Unterseite des Instrumententafel-Oberteils 11 angeformten rahmenförmigen Schusskanal 15 und einem, innerhalb des Schusskanals 15 montierten Airbagmodul 17 aufgebaut ist. Der Schusskanal 15 ist gemäß der Fig. 2 durch vordere und hintere Schusskanalwände 19, 20 sowie durch seitliche Schusskanalwände 21, 22 (Fig. 3) rahmenförmig begrenzt. Gemäß der Fig. 3 und 4 weist das Airbagmodul 17 in der Fahrzeugquerrichtung y seitlich auskragende Gehäuseflansche 24 (Fig. 3 und 4) auf. Diese sind in der Zusammenbaulage mit korrespondierenden Montageschenkeln 23 in einer Schraubverbindung 25 (Fig. 3 und 4). Wie in der Fig. 1 mit Kreuzen angedeutet, sind an jeder der Seitenwände 21, 22 des Schußkanals 15 jeweils zwei Schraubpunkte 25 vorgesehen, die in der Fahrzeuglängsrichtung x voneinander beabstandet sind. In etwa mittig zwischen den Schraubpunkten 25 jeder Seitenwand 21, 22 ist jeweils ein Grundkörperflansche 37, 38 (Fig. 3) eingeklemmt, wie es später noch beschrieben wird.

Der Grundkörper 5 weist zudem einen Halteschenkel 10 (Fig. 2) auf, der an einer Lagerkonsole des Modulquerträgers 3 verschraubt ist.

Der Schusskanal 15 ist an der Airbag-Austrittsseite über einen Airbagdeckel 27 verschlossen. Bei einer Airbag-Aktivierung entfaltet sich der Airbag in einer Schussrichtung und schlägt gegen die Unterseite des Airbagdeckels 27. Dieser wird daraufhin aus der Instrumententafel 1 herausgerissen und klappt in einer definierten Öffnungsbewegung um eine vom Fangband 35 definierte Scharnierachse in Richtung auf die in der Fig. 2 angedeutete Windschutzscheibe des Fahrzeugs.

In der Fig. 2 ist sowohl der Airbagdeckel 27 als auch der Schusskanal 15 mit seinen Kanalwänden 19 bis 22 materialeinheitlicher und einstückiger Bestandteil des Instrumententafel-Oberteils 11. Vorliegend ist das Instrumententafel-Oberteil 11 ein Schaumträger mit einer darauf angeordneten Schaumschicht 29 sowie einer sichtseitigen Dekorhaut 31.

Unmittelbar innerhalb der Schusskanalwände 19 bis 22 verläuft eine durch Laserbearbeitung eingebrachte Materialschwächung 33 (Fig. 2), die den Airbagdeckel 27 definiert. Zudem ist im Instrumententafel-Oberteil 11 ein Fangband 35 eingespritzt, und zwar mit einem Fangbandabschnitt außerhalb des Schusskanals 15 sowie einem Fangbandabschnitt im Bereich des Airbagdeckels 27.

Das Airbagmodul 13 ist im Vergleich zu den anderen Funktionselementen in der Instrumententafel vergleichsweise gewichtsintensiv und bedarf daher einer zusätzlichen Abstützung am Modulquerträger 3, um im normalen Fahrbetrieb ein Aufschwingen in den Resonanzbereich zu verhindern. Erfindungsgemäß wird eine solche Abstützung nicht durch eine Befestigungs- oder Stützlasche erzielt, die den Schusskanal 17 unmittelbar auf dem Modulquerträger 3 abstützt. Vielmehr weist der Grundkörper 5 erste, zweite und dritte Stützabschnitte 36, 37 und 38 auf, auf denen sich die Airbaganordnung 13 mit ihrer Gewichtskraft abstützt. Der erste Stützabschnitt 36 ist gemäß der Fig. 2 in der Fahrtrichtung FR vor dem Airbagmodul 17 im Grundkörper 5 ausgebildet. Die vordere Schusskanalwand 19 ist dabei in loser sowie klapperfreier Anlage mit dem horizontal verlaufenden ersten Stützabschnitt 36.

Zur Bildung einer möglichst breiten Abstützbasis sind zusätzlich noch die beiden anderen Stützabschnitte 37 und 38 (Fig. 3 und 4) vorgesehen, und zwar in der Fahrzeugquerrichtung y betrachtet jeweils seitlich des Airbagmoduls 17. Die beiden Stützabschnitten 37, 38 sind in der Fig. 3 dargestellt. Demzufolge ist der zweite und dritte Stützabschnitt 37, 38 jeweils ein horizontal ausgerichteter Grundkörperflansch. An jeder der Seitenwände 21, 22 des Schußkanals 15 ist jeweils ein Grundkörperflansch 37, 38 in etwa mittig zwischen den Schraubpunkten 25 jeder Seitenwand 21, 22 eingeklemmt.

## Patentansprüche

1. Instrumententafel für ein Fahrzeug, mit einem Instrumententafel-Oberteil (11) und einem gerüstartigen Grundkörper (5), der an einem Modulquerträger (3) des Fahrzeugrohbaus montierbar ist, welcher Grundkörper (5) Aufnahmen zur Bestückung mit Funktionselementen aufweist und zumindest einen Luftkanal (9) eines Fahrzeug-Belüftungssystems begrenzt, insbesondere einen in der Fahrzeugquerrichtung (y) entlang der Windschutzscheibe (8) verlaufenden Defrostkanal, wobei an der Beifahrerseite der Instrumententafel (1) eine Airbaganordnung (13) integriert ist, die einen bis zum Instrumententafel-Oberteil (11) herangeführten Schusskanal (15) und ein an einer Schusskanalwand (19-22) montiertes Airbagmodul (17) aufweist, **dadurch gekennzeichnet, dass** der Grundkörper (5) zumindest einen Stützabschnitt (36, 37, 38) aufweist, auf dem die Schusskanalwand (19-22) abgestützt ist, wobei die Schusskanalwand (19-22) in loser, klapperfreier Anlage mit dem Stützabschnitt (36) des Grundkörpers (5) ist, insbesondere in einem Linienkontakt.

2. Instrumententafel nach Anspruch 1, **dadurch gekennzeichnet, dass** die Schusskanalwand (19-22) an ihrem von dem Instrumententafel-Oberteil (11) abgewandten Ende in zumindest einen nach außen abgewinkelten Montageschenkel (23) übergeht, an dem ein Gehäuseflansch (24) des Airbagmoduls (17) angebunden ist, insbesondere in Schraubverbindung (25) ist.

3. Instrumententafel nach Anspruch 2, **dadurch gekennzeichnet, dass** ein zweiter und/oder ein dritter Stützabschnitt (37, 38) ein Grundkörperflansch ist, und dass der Grundkörperflansch am Schusskanal-Montageschenkel (23) angebunden ist, insbesondere zwischen dem Schusskanal-Montageschenkel (23) und dem Gehäuseflansch (22) des Airbagmoduls (17) geklemmt ist.

4. Instrumententafel nach einem der vorhergehenden Ansprüche, **dadurch gekennzeichnet, dass** der Schusskanal (15) und der den Schusskanal (15) überdeckende Airbagdeckel (27) materialeinheitliche und einstückige Bestandteile des Instrumententafel-Oberteils (11) sind.

5. Instrumententafel nach einem der vorhergehenden Ansprüche, **dadurch gekennzeichnet, dass** das Instrumententafel-Oberteil (11) ein Schaumträger ist, der mit einer darauf angeordneten Schaumschicht (29) und einer sichtseitigen Dekorhaut (31) einen Mehrschichtaufbau bildet.

6. Instrumententafel nach einem der vorhergehenden Ansprüche, **dadurch gekennzeichnet, dass** der insbesondere erste Stützabschnitt (36) eine, in der Fahrzeuglängsrichtung (x) betrachtet, vordere Schusskanalwand (19) des Schusskanals (15) abstützt.

7. Instrumententafel nach einem der vorhergehenden Ansprüche, **dadurch gekennzeichnet, dass** der insbesondere zweite und/oder dritte Stützabschnitt (37, 38) eine in der Fahrzeugquerrichtung (y) betrachtet seitliche Schusskanalwand (21, 22) des Schusskanals (15) abstützt.

8. Instrumententafel nach einem der Ansprüche 4 bis 7, **dadurch gekennzeichnet, dass** der erste, der zweite und der dritte Stützabschnitt (36, 37, 38) gemeinsam eine Abstützbasis für die Schusskanalwand (19 bis 22) bilden.

## Claims

1. Instrument panel for a vehicle, with an instrument-panel upper part (11) and a frame-like basic body (5) which can be mounted on a module crossmember (3) of the vehicle bodyshell, which basic body (5) has receptacles for fitting with functional elements, and bounds at least one air duct (9) of a vehicle ventilation system, in particular a defrost duct running along the windscreen (8) in the transverse direction (y) of the vehicle, wherein an airbag arrangement (13) is integrated on the front passenger's side of the instrument panel (1) and has an ejection channel (15) guided as far as the instrument-panel upper part (11) and an airbag module (17) mounted on an ejection channel wall (19-22), **characterized in that** the basic body (5) has at least one supporting portion (36, 37, 38) on which the ejection channel wall (19-22) is supported, wherein the ejection channel wall (19-22) is in loose, rattle-free contact, in particular in linear contact, with the supporting portion (36) of the basic body (5).

2. Instrument panel according to Claim 1, **characterized in that** the ejection channel wall (19-22) merges at its end facing away from the instrument-panel upper part (11) into at least one outwardly angled mounting limb (23) to which a housing flange (34) of the airbag module (17) is connected, in particular in a screw connection (25).

3. Instrument panel according to Claim 2, **characterized in that** a second and/or a third supporting portion (37, 38) is a basic body flange, and **in that** the basic body flange is connected to the ejection-channel mounting limb (23), in particular is clamped between the ejection-channel mounting limb (23) and the housing flange (22) of the airbag module (17).

4. Instrument panel according to one of the preceding claims, **characterized in that** the ejection channel (15) and the airbag cover (27) covering the ejection channel (15) are material-coordinated and integral parts of the instrument-panel upper part (11).

5. Instrument panel according to one of the preceding claims, **characterized in that** the instrument-panel upper part (11) is a foam carrier which, with a foam layer (29) arranged thereon and a visible decorative skin (31), forms a multi-layered construction.

6. Instrument panel according to one of the preceding claims, **characterized in that** the in particular first supporting portion (36) supports a front ejection channel wall (19) of the ejection channel (15), as viewed in the longitudinal direction (x) of the vehicle.

7. Instrument panel according to one of the preceding claims, **characterized in that** the in particular second and/or third supporting portion (37, 38) supports a lateral ejection channel wall (21, 22) of the ejection channel (15), as viewed in the transverse direction (y) of the vehicle.

8. Instrument panel according to one of Claims 4 to 7, **characterized in that** the first, the second and the third supporting portions (36, 37, 38) together form a supporting base for the ejection channel wall (19 to 22).

## Revendications

1. Tableau de bord pour un véhicule, comprenant une partie supérieure de tableau de bord (11) et un corps de base (5) de type structure, qui peut être monté sur une traverse modulaire (3) de la caisse du véhicule, lequel corps de base (5) présente des logements destinés à recevoir des éléments fonctionnels et délimite au moins un conduit d'air (9) d'un système de ventilation du véhicule, notamment un conduit de dégivrage s'étendant dans la direction transversale (y) le long du pare-brise (8), un agencement d'airbag (13) étant intégré du côté passager du tableau de bord (1), lequel présente un conduit de tir (15) s'étendant jusqu'à la partie supérieure du tableau de bord (11) et un module d'airbag (17) monté sur une paroi de conduit de tir (19-22), **caractérisé en ce que** le corps de base (5) présente au moins une portion de support (36, 37, 38) sur laquelle est supportée la paroi de canal de tir (19-22), la paroi de canal de tir (19-22) étant en appui libre, sans claquement, avec la portion de support (36) du corps de base (5), en particulier en contact linéaire avec celle-ci.

2. Tableau de bord selon la revendication 1, **caractérisé en ce que** la paroi de canal de tir (19-22), au niveau de son extrémité opposée à la partie supérieure du tableau de bord (11), se prolonge par au moins une bride de montage coudée vers l'extérieur (23) à laquelle est raccordée une bride de boîtier (24) du module d'airbag (17), notamment par liaison par vissage (25).

3. Tableau de bord selon la revendication 2, **caractérisé en ce qu'**une deuxième et/ou une troisième portion de support (37, 38) est une bride de corps de base, et **en ce que** la bride de corps de base est reliée à la bride de montage de canal de tir (23), notamment est serrée entre la bride de montage de canal de tir (23) et la bride de boîtier (22) du module d'airbag (17).

4. Tableau de bord selon l'une quelconque des revendications précédentes, **caractérisé en ce que** le canal de tir (15) et le couvercle d'airbag (27) recouvrant le canal de tir (15) sont des constituants d'une seule pièce et venus de matière de la partie supérieure du tableau de bord (11).

5. Tableau de bord selon l'une quelconque des revendications précédentes, **caractérisé en ce que** la partie supérieure du tableau de bord (11) est un support en mousse qui forme une structure multicouche avec une couche de mousse (29) disposée sur celui-ci et une peau décorative visible (31).

6. Tableau de bord selon l'une quelconque des revendications précédentes, **caractérisé en ce que** notamment la première portion de support (36) supporte une paroi de canal de tir avant (19) du canal de tir (15), vu dans la direction longitudinale du véhicule (x).

7. Tableau de bord selon l'une quelconque des revendications précédentes, **caractérisé en ce que** notamment la deuxième et/ou la troisième portion de support (37, 38) supportent une paroi de canal de tir latérale (21, 22) du canal de tir (15), vu dans la direction transversale du véhicule (y).

8. Tableau de bord selon l'une quelconque des revendications 4 à 7, **caractérisé en ce que** la première, la deuxième et la troisième portion de support (36, 37, 38) forment ensemble une base de support pour la paroi de canal de tir (19 à 22).
